# EUROPEAN PATENT APPLICATION

(11) **EP 4 553 987 A1**
(43) Date of publication of application: **14.05.2025**
(21) Application number: 24180903.7
(22) Date of filing: 07.06.2024
(51) Int. Cl.: H01M 50/477, H01M 50/586, H01M 50/103, H01M 50/15, H01M 50/176, H01M 50/557, H01M 50/548, H01M 50/533

(54) **SECONDARY BATTERY**

(30) Priority: 07.11.2023 KR 20230152379
(71) Applicant: Samsung SDI Co., Ltd., Yongin-si, Gyeonggi-do 17084 (KR)
(72) Inventor: SONG, Da Seong, 17084 Yongin-si (KR); HAN, Dae Kyung, 17084 Yongin-si (KR); KIM, Min Woo, 17084 Yongin-si (KR)
(74) Representative: Marks & Clerk LLP

(57) **Abstract**

The present disclosure relates to a secondary battery including an electrode assembly, a main tab electrically coupled to the electrode assembly, a sub-tab electrically coupled to the main tab, and extending away from the electrode assembly, an insulating member covering the main tab, and including a base plate contacting the main tab, and defining base plate through-holes, and one or more stacked plates stacked on the base plate, and defining stacked plate through-holes, a case accommodating the electrode assembly, the main tab, the sub-tab, and the insulating member, a side terminal electrically coupled to the sub-tab, and a cap plate to which the side terminal is coupled to pass therethrough, and sealing the case.

## Description

### BACKGROUND

### 1. Field

The present disclosure relates to a secondary battery.

### 2. Description of the Related Art

Unlike a primary battery, which cannot be recharged, a secondary battery is a battery that can be charged and discharged. A low-capacity secondary battery has been used in small portable electronic devices, such as smartphones, feature phones, and digital cameras, and a large-capacity secondary battery has been widely used as a power source for driving motors in hybrid vehicles, electric vehicles, and the like, or as a power storage battery. The secondary battery includes an electrode assembly including a positive electrode material and a negative electrode material, a case accommodating the electrode assembly, an electrode terminal coupled to the electrode assembly, and the like.

The above-described information that serves as the background of the present disclosure is only for improving understanding of the background of the present disclosure, and thus may include information that does not constitute the related art.

### SUMMARY

The present disclosure is directed to providing a secondary battery having excellent safety.

A secondary battery according to the present disclosure includes an electrode assembly, a main tab electrically coupled to the electrode assembly, a sub-tab electrically coupled to the main tab, and extending away from the electrode assembly, an insulating member covering the main tab, and including a base plate contacting the main tab, and defining base plate through-holes, and one or more stacked plates stacked on the base plate, and defining stacked plate through-holes, a case accommodating the electrode assembly, the main tab, the sub-tab, and the insulating member, a side terminal electrically coupled to the sub-tab, and a cap plate to which the side terminal is coupled to pass therethrough, and sealing the case.

The base plate may include a first plate region contacting one side of the main tab, a second plate region contacting another side of the main tab, and a connection region interconnecting the first and second plate regions, wherein the base plate through-holes include first plate first through-holes provided in the first plate region, and second plate second through-holes provided in the second plate region.

The connection region may define an opening through which the sub-tab passes.

The base plate may include a first sidewall along an edge of the first plate region, and a second sidewall along an edge of the second plate region.

The stacked plates may include a first stacked plate stacked on the first plate region, and a second stacked plate stacked on the second plate region.

The first stacked plate may contact the first sidewall, and the second stacked plate may contact the second sidewall.

The stacked plate through-holes and the base plate through-holes may overlap or not overlap each other in a thickness direction.

The stacked plate through-holes and the base plate through-holes may have different respective shapes.

The stacked plate through-holes and the base plate through-holes may have different respective sizes.

The stacked plates may include a first plate stacked on the base plate and defining a first plate through-hole, and a second plate stacked on the first plate and defining a second plate through-hole.

The first plate through-hole and the second plate through-hole may overlap or do not overlap each other in a thickness direction.

The first plate through-hole and the second plate through-hole may have different respective sizes.

The first plate through-hole and the second plate through-hole may have different respective shapes.

The stacked plate through-holes and the base plate through-holes may have a circular shape, a quadrangular shape, a triangular shape, a pentagonal shape, a polygonal shape, a cross shape, or an L-shape.

The sub-tab may be bent in a U-shape between the main tab and the side terminal.

At least some of the above and other features of the invention are set out in the claims.

### BRIEF DESCRIPTION OF THE DRAWINGS

FIGS. 1A, 1B, and 1C are respectively a perspective view, a cross-sectional view, and an exploded perspective view of a secondary battery according to the present disclosure.
FIG. 2 is a partial perspective view illustrating a welding method between a terminal and a sub-tab of the secondary battery according to the present disclosure.
FIGS. 3A and 3B are respectively a perspective view, and an exploded perspective view, of an insulating member of the secondary battery according to the present disclosure.
FIGS. 4A to 4D are respectively plan views and a perspective view of the insulating member of the secondary battery according to the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. In one or more embodiments, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5% of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

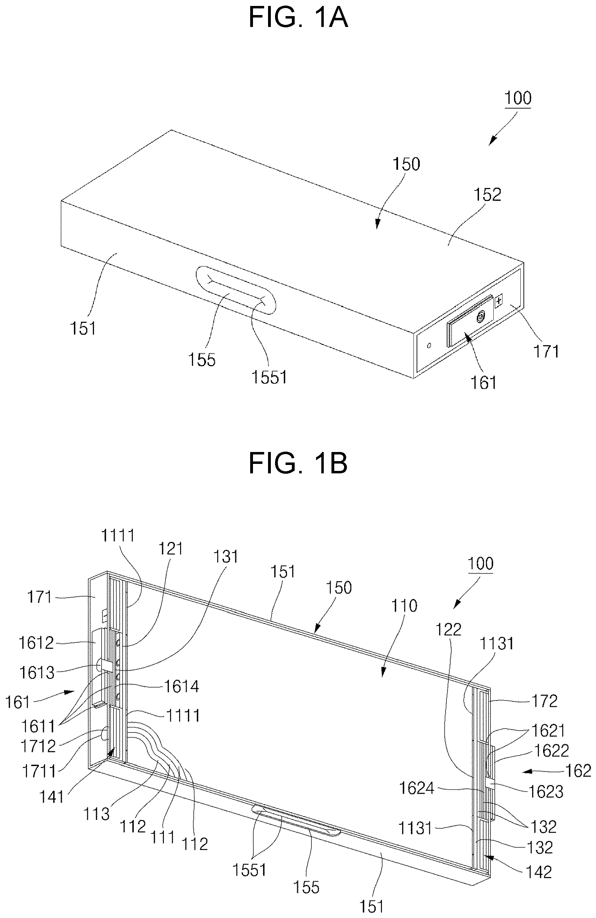

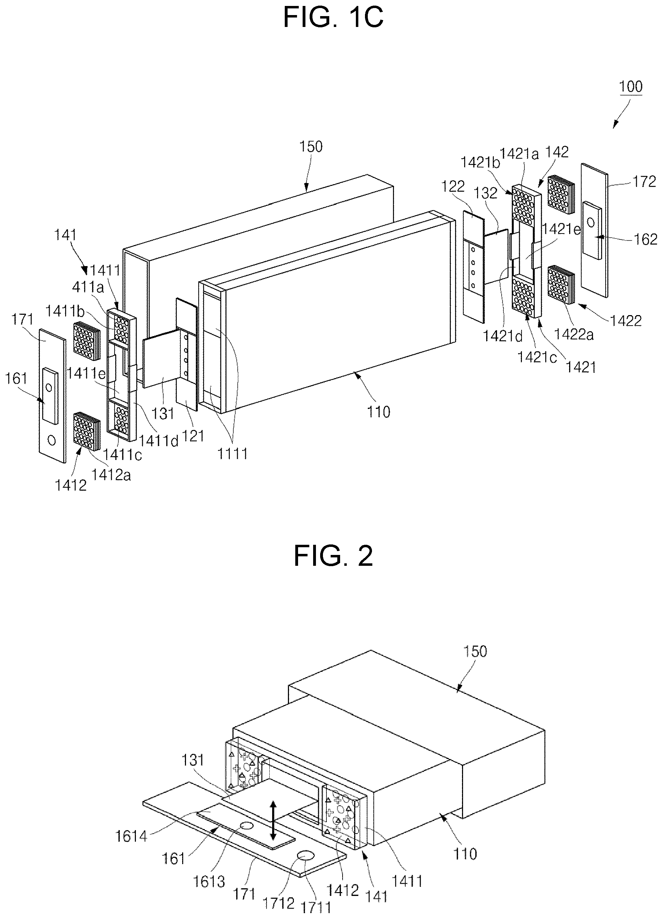

FIGS. 1A, 1B, and 1C are a perspective view, a cross-sectional view, and an exploded perspective view of a secondary battery 100 according to the present disclosure, respectively. As shown in FIGS. 1A to 1C, the secondary battery 100 according to the present disclosure may include an electrode assembly 110, a pair of main tabs 121 and 122, a pair of sub-tabs 131 and 132, a pair of insulating members 141 and 142, a case 150, a pair of terminals 161 and 162, and a pair of cap plates 171 and 172.

The electrode assembly 110 may include a positive electrode plate 111, a separator 112, and a negative electrode plate 113. In one or more embodiments, the electrode assembly 110 may be provided in the form of a stack that is stacked in the order of the positive electrode plate 111, the separator 112, the negative electrode plate 113, and another separator 112, or may be provided in the form of a wound jelly roll. The electrode assembly 110 may typically have a substantially plate-shaped rectangular parallelepiped shape that can be accommodated inside the case 150. The electrode assembly 110 may include, or may be referred to as, an electrode group, an electrode, or a cell. In one or more embodiments, the positive electrode plate 111 may further include a positive electrode tab 1111 (or a positive electrode multi-tab) protruding toward, and coupled to, a positive electrode terminal 161 on one side thereof, and the negative electrode plate 113 may further include a negative electrode tab 1131 (or a negative electrode multi-tab) protruding toward a negative electrode terminal 162 on the other side opposite to the one side. The electrode assembly 110 may be coupled to an external charging device to charge electrical energy, or may be coupled to an external electrical device to discharge electrical energy.

The pair of main tabs 121 and 122 may include a positive electrode main tab 121 and a negative electrode main tab 122. In one or more embodiments, the positive electrode main tab 121 may be electrically coupled (e.g., welded) to the positive electrode tab 1111 protruding from one side of the electrode assembly 110. In one or more embodiments, the positive electrode main tab 121 may be positioned in the form of an approximately rectangular plate on one side of the electrode assembly 110, and may be welded to the positive electrode tab 1111. In one or more embodiments, the positive electrode main tab 121 may include aluminium or an aluminium alloy.

In one or more embodiments, the negative electrode main tab 122 may be electrically coupled (e.g., welded) to the negative electrode tab 1131 protruding from the other side of the electrode assembly 110. In one or more embodiments, the negative electrode main tab 122 may be positioned in the form of an approximately rectangular plate on the other side of the electrode assembly 110, and may be welded to the negative electrode tab 1131. In one or more embodiments, the negative electrode main tab 122 may include copper, a copper alloy, nickel or a nickel alloy.

The pair of sub-tabs 131 and 132 may include a positive electrode sub-tab 131 and a negative electrode sub-tab 132. In one or more embodiments, the positive electrode sub-tab 131 may be electrically coupled (e.g., welded) to approximately the center of the positive electrode main tab 121. In one or more embodiments, the positive electrode sub-tab 131 may be bent in an approximately U-shape, and then may be electrically coupled (e.g., welded) to the positive electrode terminal 161. In one or more embodiments, the positive electrode sub-tab 131 may include aluminium or an aluminium alloy.

In one or more embodiments, the negative electrode sub-tab 132 may be electrically coupled (e.g., welded) to approximately the center of the negative electrode main tab 122. In one or more embodiments, the negative electrode sub-tab 132 may be bent in an approximately U-shape, and then may be electrically coupled (e.g., welded) to the negative electrode terminal 162. In one or more embodiments, the negative electrode sub-tab 132 may include copper, a copper alloy, nickel, or a nickel alloy.

The pair of insulating members 141 and 142 may include a positive electrode-side insulating member 141 and a negative electrode-side insulating member 142.

In one or more embodiments, the positive electrode-side insulating member 141 may substantially cover one side of the electrode assembly 110. In one or more embodiments, the positive electrode-side insulating member 141 may substantially cover the positive electrode main tab 121. In one or more embodiments, the positive electrode-side insulating member 141 may include a positive electrode-side base plate 1411 in contact with the positive electrode main tab 121 and having a plurality of base plate through-holes 1411a, and one or more positive electrode-side stacked plates 1412 stacked on the positive electrode-side base plate 1411 and having a plurality of stacked plate through-holes 1412a. In one or more embodiments, the positive electrode-side base plate 1411 may include a positive electrode-side first plate region 1411b in contact with one side of the positive electrode main tab 121, a positive electrode-side second plate region 1411c in contact with the other side of the positive electrode main tab 121, and a positive electrode-side connection region 1411d that interconnects the positive electrode-side first and second plate regions 1411b and 1411c. In one or more embodiments, the plurality of base plate through-holes 1411a may include a plurality of positive electrode-side first plate first through holes 1411a provided in the positive electrode-side first plate region 1411b, and a plurality of positive electrode-side second plate second through holes 1411a provided in the positive electrode-side second plate region 1411c.

In one or more embodiments, the positive electrode-side connection region 1411d may include, or define, a positive electrode-side opening 1411e through which the positive electrode sub-tab 131 passes. In one or more embodiments, the positive electrode-side opening 1411e may have an approximately rectangular shape.

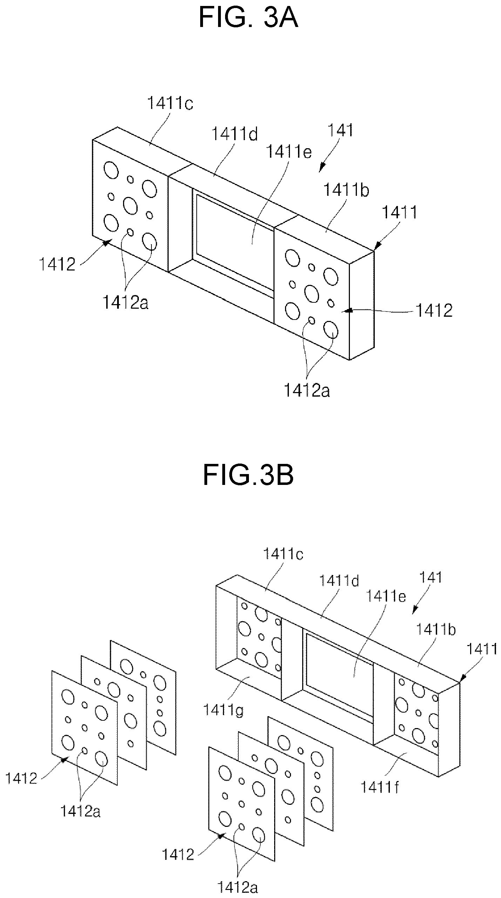

In one or more embodiments, the positive electrode-side base plate 1411 may include a first sidewall 1411f (e.g., see FIG. 3B) provided along an edge of the positive electrode-side first plate region 1411b, and a second sidewall 1411g (e.g., see FIG. 3B) provided along an edge of the positive electrode-side second plate region 1411c. In one or more embodiments, the positive electrode-side stacked plate 1412 may include a positive electrode-side first stacked plate 1412 stacked on the positive electrode-side first plate region 1411b, and a positive electrode-side second stacked plate 1412 stacked on the positive electrode-side second plate region 1411c. In one or more embodiments, the positive electrode-side first stacked plate 1412 may be in contact with the first sidewall 1411f, and the positive electrode-side second stacked plate 1412 may be in contact with the second sidewall 1411g.

In one or more embodiments, the negative electrode-side insulating member 142 may substantially cover the other side of the electrode assembly 110. In one or more embodiments, the negative electrode-side insulating member 142 may substantially cover the negative electrode main tab 122. In one or more embodiments, the negative electrode-side insulating member 142 may include a negative electrode-side base plate 1421 in contact with the negative electrode main tab 122 and having a plurality of base plate through-holes 1421a, and one or more negative electrode-side stacked plates 1422 stacked on the negative electrode-side base plate 1421 and having a plurality of stacked plate through-holes 1422a. In one or more embodiments, the negative electrode-side base plate 1421 may include a negative electrode-side first plate region 1421b in contact with one side of the negative electrode main tab 122, a negative electrode-side second plate region 1421c in contact with the other side of the negative electrode main tab 122, and a negative electrode-side connection region 1421d that interconnects the negative electrode-side first and second plate regions 1421b and 1421c. In one or more embodiments, the plurality of base plate through-holes 1421a may include a plurality of negative electrode-side first plate first through-holes 1421a provided in the negative electrode-side first plate region 1421b, and a plurality of negative electrode-side second plate second through-holes 1421a provided in the negative electrode-side second plate region 1421c.

In one or more embodiments, the negative electrode-side connection region 1421d may include, or define, a negative electrode-side opening 1421e through which the negative electrode sub-tab 132 passes. In one or more embodiments, the negative electrode-side opening 1421e may have an approximately rectangular shape.

In one or more embodiments, the negative electrode-side base plate 1421 may include a negative electrode-side first sidewall provided along an edge of the negative electrode-side first plate region 1421b, and a negative electrode-side second sidewall provided along an edge of the negative electrode-side second plate region 1421c. In one or more embodiments, the negative electrode-side stacked plate 1422 may include a negative electrode-side first stacked plate 1422 stacked on the negative electrode-side first plate region 1421b, and a negative electrode-side second stacked plate 1422 stacked on the negative electrode-side second plate region 1421c. In one or more embodiments, the negative electrode-side first stacked plate 1422 may be in contact with the negative electrode-side first sidewall, and the negative electrode-side second stacked plate 1422 may be in contact with the negative electrode-side second sidewall.

The case 150 may have a flat rectangular parallelepiped shape. In one or more embodiments, the case 150 may include a pair of short side portions 151 opposite to each other, a pair of long side portions 152 connecting the pair of short side portions 151, and short side portions 151 and long side portions 152 on one side. The case 150 may accommodate the electrode assembly 110, the pair of main tabs 121 and 122, the pair of sub-tabs 131 and 132, and the pair of insulating members 141 and 142, which are described above. In one or more embodiments, the case 150 may include, or may be referred to as, a can, a casing material, a housing, or a body. In one or more embodiments, the case 150 may include aluminium, an aluminium alloy, iron, an iron alloy, an iron nickel alloy, an iron nickel chromium alloy, or stainless steel. In one or more embodiments, the case 150 may further include a safety vent 155 provided in at least one short side portion 151 of the pair of short side portions 151. The safety vent 155 may include, or may be referred to as, a safety valve, a safety vent, a thin film, or a thin wall. In one or more embodiments, the safety vent 155 may be provided at the center of the short side portion 151. In one or more embodiments, the safety vent 155 may have an approximately rectangular or elliptical shape. In one or more embodiments, a thickness of the safety vent 155 is provided to be less than a thickness of the short side portion 151, so that, if an internal pressure of the case 150 is greater than a set pressure or an operating pressure, the safety vent 155 is broken, and gas (e.g., high-temperature and high-pressure gas) inside the case 150 is allowed to be discharged to the outside. In one or more embodiments, the safety vent 155 may include a notch 1551 in the form of a relatively thinner line so as to be suitably broken at the operating pressure. The notch 1551 may include, define, or may be referred to as, a recessed groove, a groove, or a recess.

The pair of terminals 161 and 162 may include the positive electrode terminal 161 on one side, and the negative electrode terminal 162 on the other side. The terminal may include, or may be referred to as, a side terminal, a terminal plate, or a terminal portion.

In one or more embodiments, the positive electrode terminal 161 may be coupled to pass through a positive electrode-side cap plate 171, and may be electrically coupled to the positive electrode sub-tab 131. In one or more embodiments, the positive electrode terminal 161 may be insulated from the positive electrode-side cap plate 171 through an insulating gasket and/or insulating plate 1611. In one or more embodiments, the positive electrode terminal 161 may include an outer positive electrode terminal plate 1612 positioned outside the positive electrode-side cap plate 171, a positive electrode pillar 1613 passing through the positive electrode-side cap plate 171, and an inner positive electrode terminal plate 1614 positioned inside the positive electrode-side cap plate 171. In one or more embodiments, the positive electrode sub-tab 131 may be electrically coupled to the inner positive electrode terminal plate 1614.

In one or more embodiments, the negative electrode terminal 162 may be coupled to pass through a negative electrode-side cap plate 172, and may be electrically coupled to the negative electrode sub-tab 132. In one or more embodiments, the negative electrode terminal 162 may be insulated from the negative electrode-side cap plate 172 through an insulating gasket and/or insulating plate 1621. In one or more embodiments, the negative electrode terminal 162 may include an outer negative electrode terminal plate 1622 positioned outside the negative electrode-side cap plate 172, a negative electrode pillar 1623 passing through the negative electrode-side cap plate 172, and an inner negative electrode terminal plate 1624 positioned inside the negative electrode-side cap plate 172. In one or more embodiments, the negative electrode sub-tab 132 may be electrically coupled to the inner negative electrode terminal plate 1624.

The positive electrode terminal 161 and the negative electrode terminal 162 may be coupled to a charger to provide electrical energy to the electrode assembly 110 (charging), or may be coupled to an electrical device to provide electrical energy from the electrode assembly 110 to the electrical device (discharging).

In one or more embodiments, by connecting bus bars to the positive electrode terminal 161 and to the negative electrode terminal 162, a plurality of secondary batteries 100 (or battery cells) are allowed to be electrically coupled in series and/or in parallel to provide a battery module or a battery pack. In one or more embodiments, the positive electrode terminal 161 may be directly electrically coupled to the negative electrode terminal 162 of another secondary battery 100 without a bus bar, and the negative electrode terminal 162 may be directly coupled to the positive electrode terminal 161 of another secondary battery 100 without a bus bar.

The pair of cap plates 171 and 172 may include the positive electrode-side cap plate 171 and the negative electrode-side cap plate 172. In one or more embodiments, the positive electrode-side cap plate 171 may be laser welded to the short side portions 151 and the long side portions 152 of the case 150 on one side. As described above, the positive electrode terminal 161 may be provided through the positive electrode-side cap plate 171. In one or more embodiments, the negative electrode-side cap plate 172 may be laser welded to the short side portions 151 and to the long side portions 152 of the case 150 on the other side. As described above, the negative electrode terminal 162 may be provided through the negative electrode-side cap plate 172. In one or more embodiments, the material of the pair of cap plates 171 and 172 may be the same as or similar to the material of the case 150. In one or more embodiments, the positive electrode-side cap plate 171 and/or the negative electrode-side cap plate 172 may further include a liquid injection hole 1711 for injecting an electrolyte, and a plug 1712 coupled to the liquid injection hole 1711.

Hereinafter, because a positive electrode-side configuration and a negative electrode-side configuration are the same or similar to each other, the description will be made on the basis of the positive electrode-side configuration for convenience.

FIG. 2 is a partial perspective view illustrating a welding method between the positive electrode terminal 161 and the sub-tab 131 of the secondary battery 100 according to the present disclosure. As shown in FIG. 2, the sub-tab 131 may pass through the positive electrode-side opening 1411e of the positive electrode-side insulating member 141, and may extend in a direction away from the electrode assembly 110 to be electrically coupled to the inner positive electrode terminal plate 1614 of the positive electrode terminal 161. In one or more embodiments, the sub-tab 131 may be laser welded to the inner positive electrode terminal plate 1614 by a laser beam, and at this point, welding byproducts, such as slag, heat tint, and an oxide layer, may be generated. In one or more embodiments, after the welding process, the sub-tab 131 may be folded in an approximately U-shape, and the cap plate 171 may be coupled to the case 150. In one or more embodiments, as a laser beam is irradiated onto a coupling surface between the cap plate 171 and the case 150, the cap plate 171 seals the case 150. Thereafter, an electrolyte is injected through the liquid injection hole 1711 provided in the cap plate 171, and finally, the liquid injection hole 1711 may be closed with the plug 1712.

In one or more embodiments, welding byproducts may be generated during the welding process between the sub-tab 131 and the inner positive electrode terminal plate 1614, but the likelihood of these welding byproducts entering the electrode assembly 110 is reduced or prevented by the positive electrode-side insulating member 141 (e.g., a plurality of positive electrode-side stacked plates 1412). In one or more embodiments, the electrolyte may be introduced into the electrode assembly 110 through the plurality of through-holes 1412a provided in the positive electrode-side stacked plates 1412.

FIGS. 3A and 3B are respectively a perspective view and an exploded perspective view of the positive electrode-side insulating member 141 of the secondary battery 100 according to the present disclosure. As shown in FIGS. 3A and 3B, the positive electrode-side insulating member 141 according to the present disclosure may include a positive electrode-side base plate 1411 in contact with one side and/or the main tab 121 of the electrode assembly 110, and having the plurality of base plate through-holes 1411a, and the plurality of positive electrode-side stacked plates 1412 stacked on the positive electrode-side base plate 1411, and having the plurality of stacked plate through-holes 1412a. In one or more embodiments, the positive electrode-side insulating member 141 may include polypropylene (PP), polyethylene (PE), polycarbonate (PC), polyethylene terephthalate (PET), polystyrene (PS), or polyimide (PI). In one or more embodiments, the positive electrode-side insulating member 141 may include a porous material. As described above, the positive electrode-side insulating member 141 reduces or prevents welding byproducts entering the electrode assembly 110, while allowing an electrolyte to flow into the electrode assembly 110.

In one or more embodiments, the positive electrode-side base plate 1411 may include the positive electrode-side first plate region 1411b in contact with one side of the main tab 121, the positive electrode-side second plate region 1411c in contact with the other side of the main tab 121, and the positive electrode-side connection region 1411d interconnecting the positive electrode-side first and second plate regions 1411b and 1411c. In one or more embodiments, the plurality of base plate through-holes 1411a may include the plurality of first plate first through holes 1411a provided in the positive electrode-side first plate region 1411b, and the plurality of second plate second through holes 1411a provided in the positive electrode-side second plate region 1411c. The positive electrode-side connection region 1411d may include the positive electrode-side opening 1411e through which the sub-tab 131 passes.

In one or more embodiments, the positive electrode-side base plate 1411 may include the first sidewall 1411f provided along an edge of the positive electrode-side first plate region 1411b, and the second sidewall 1411g provided along an edge of the positive electrode-side second plate region 1411c. The positive electrode-side stacked plates 1412 may include the first positive electrode-side stacked plate 1412 stacked on the positive electrode-side first plate region 1411b, and the second positive electrode-side stacked plate 1412 stacked on the positive electrode-side second plate region 1411c. In one or more embodiments, the first positive electrode-side stacked plate 1412 may be in contact with the first sidewall 1411f, and the second positive electrode-side stacked plate 1412 may be in contact with the second sidewall 1411g.

In one or more embodiments, the position of the stacked plate through-hole 1412a and the position of the base plate through-hole 1411a may not overlap each other in a thickness direction. In one or more embodiments, the position of the stacked plate through-hole 1412a and the position of the base plate through-hole 1411a may overlap each other in the thickness direction. In one or more embodiments, the shape of the stacked plate through-hole 1412a and the shape of the base plate through-hole 1411a may be different from each other. In one or more embodiments, the shape of the stacked plate through-hole 1412a and the shape of the base plate through-hole 1411a may be the same as each other. In one or more embodiments, the size of the stacked plate through-hole 1412a and the size of the base plate through-hole 1411a may be different from each other. In one or more embodiments, the size of the stacked plate through-hole 1412a and the size of the base plate through-hole 1411a may be the same as each other.

In one or more embodiments, the positive electrode-side stacked plates 1412 may include a first plate stacked on the positive electrode-side base plate 1411, and having/defining a first plate through-hole, and a second plate stacked on the first plate, and having/defining a second plate through-hole. In one or more embodiments, the positive electrode-side stacked plates 1412 may further include a third plate stacked on the second plate, and having/defining a third plate through-hole.

In one or more embodiments, the position of the first plate through-hole and the position of the second plate through-hole may or may not overlap each other in the thickness direction. In one or more embodiments, the position of the second plate through-hole and the position of the third plate through-hole may or may not overlap each other in the thickness direction.

In one or more embodiments, the size of the first plate through-hole and the size of the second plate through-hole may be different from each other. In one or more embodiments, the size of the second plate through-hole and the size of the third plate through-hole may be different from each other.

In one or more embodiments, the shape of the first plate through-hole and the shape of the second plate through-hole may be different from each other. In one or more embodiments, the shape of the second plate through-hole and the shape of the third plate through-hole may be different from each other.

In one or more embodiments, each of the first, second, and third plates and their through-holes is the same or similar to the positive electrode-side stacked plates 1412 and its through-holes 1412a described above, and the reference numerals for the first, second, and third plates and their through-holes are omitted.

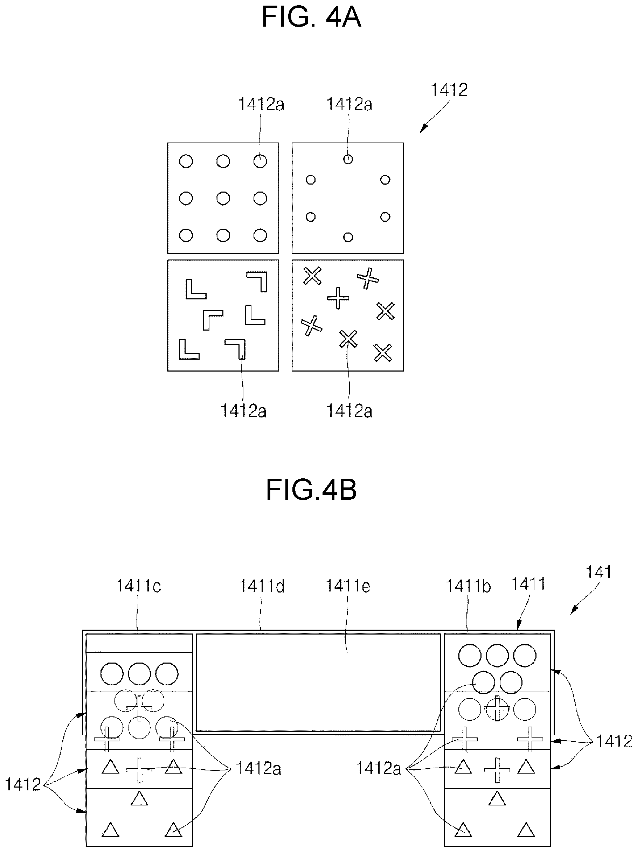

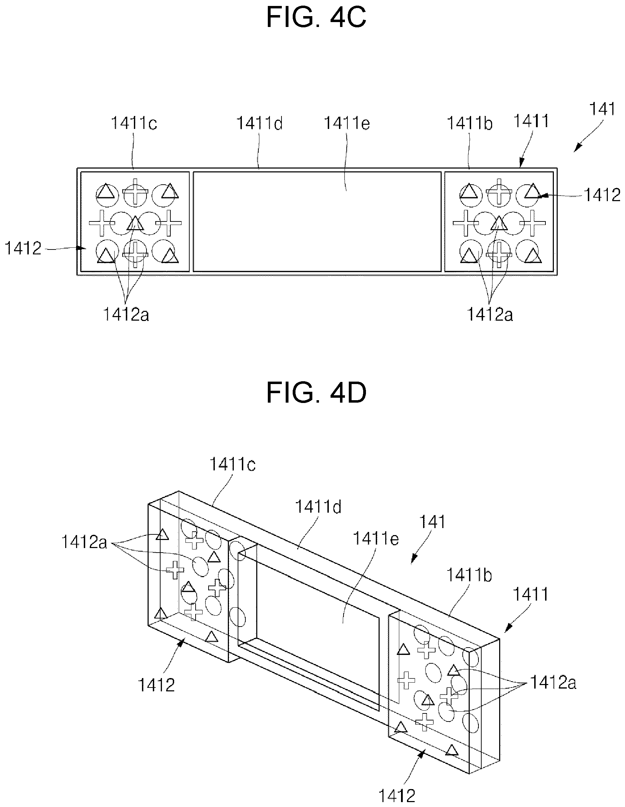

FIGS. 4A to 4D are respectively plan views and a perspective view of the positive electrode-side insulating member 141 of the secondary battery 100 according to the present disclosure. As shown in FIGS. 4A to 4D, the base plate through-hole 1411a and/or the stacked plate through-hole 1412a may have a circular shape, a quadrangular shape, a triangular shape, a pentagonal shape, a polygonal shape, a cross shape, or an L-shape, or may also have various other shapes. In one or more embodiments, the shape of each of the stacked plate through-holes 1412a provided to the plurality of positive electrode-side stacked plates 1412 may be different. As described above, the entire path of the through-hole provided in the positive electrode-side insulating member 141 has a substantially meandering shape or a zigzag shape, thereby making it difficult for welding byproducts to pass therethrough. In one or more embodiments, even if welding byproducts are generated during the welding process, the safety of the secondary battery 100 may be improved by not directly transferring the welding byproducts to the electrode assembly 110.

The present disclosure provides a secondary battery in which the inflow of welding byproducts during a welding process between a terminal and a tab can be reduced or prevented, and an electrolyte can be suitably injected in an electrolyte injection process.

The above description is only one or more embodiments for implementing a secondary battery according to the present disclosure, and the present disclosure is not limited to the above-described embodiments. As claimed in the following claims, the present disclosure includes the scope in which various changes can be made by anyone skilled in the art without departing from the gist of the present disclosure, with functional equivalents of the claims to be included therein.

## Claims

1. A secondary battery comprising:
an electrode assembly;
a main tab electrically coupled to the electrode assembly;
a sub-tab electrically coupled to the main tab, and extending away from the electrode assembly;
an insulating member covering the main tab, and comprising:
a base plate contacting the main tab, and defining base plate through-holes; and
one or more stacked plates stacked on the base plate, and defining stacked plate through-holes;
a case accommodating the electrode assembly, the main tab, the sub-tab, and the insulating member;
a side terminal electrically coupled to the sub-tab; and
a cap plate to which the side terminal is coupled to pass therethrough, and sealing the case.

2. The secondary battery as claimed in claim 1, wherein the base plate comprises a first plate region contacting one side of the main tab, a second plate region contacting another side of the main tab, and a connection region interconnecting the first and second plate regions, and
wherein the base plate through-holes comprise first plate first through-holes provided in the first plate region, and second plate second through-holes provided in the second plate region.

3. The secondary battery as claimed in claim 2, wherein the connection region defines an opening through which the sub-tab passes.

4. The secondary battery as claimed in claim 3, wherein the base plate comprises a first sidewall along an edge of the first plate region, and a second sidewall along an edge of the second plate region.

5. The secondary battery as claimed in claim 4, wherein the stacked plates comprise a first stacked plate stacked on the first plate region, and a second stacked plate stacked on the second plate region.

6. The secondary battery as claimed in claim 5, wherein the first stacked plate contacts the first sidewall, and the second stacked plate contacts the second sidewall.

7. The secondary battery as claimed in any one of claims 1 to 6, wherein the stacked plate through-holes and the base plate through-holes overlap or do not overlap each other in a thickness direction.

8. The secondary battery as claimed in any one of claims 1 to 7, wherein the stacked plate through-holes and the base plate through-holes have different respective shapes.

9. The secondary battery as claimed in any one of claims 1 to 8, wherein the stacked plate through-holes and the base plate through-holes have different respective sizes.

10. The secondary battery as claimed in any one of claims 1 to 4, wherein the stacked plates comprise a first plate stacked on the base plate and defining a first plate through-hole, and a second plate stacked on the first plate and defining a second plate through-hole.

11. The secondary battery as claimed in claim 10, wherein the first plate through-hole and the second plate through-hole overlap or do not overlap each other in a thickness direction.

12. The secondary battery as claimed in claim 10 or claim 11, wherein the first plate through-hole and the second plate through-hole have different respective sizes.

13. The secondary battery as claimed in any one of claims 10 to 12, wherein the first plate through-hole and the second plate through-hole have different respective shapes.

14. The secondary battery as claimed in any one of claims 1 to 13, wherein the stacked plate through-holes and the base plate through-holes have a circular shape, a quadrangular shape, a triangular shape, a pentagonal shape, a polygonal shape, a cross shape, or an L-shape.

15. The secondary battery as claimed in any one of claims 1 to 14, wherein the sub-tab is bent in a U-shape between the main tab and the side terminal.
